# DEMANDE DE BREVET EUROPEEN

(11) **EP 1 119 095 A1**
(43) Date de publication de la demande: **25.07.2001**
(21) Numéro de dépôt: 00403635.6
(22) Date de dépôt: 21.12.2000
(51) Int. Cl.: H02M 5/27

(54) **Convertisseur de fréquence alimenté par un réseau industriel pour délivrer une basse tension à une fréquence plus élevée que celle dudit réseau**

(30) Priorité: 22.12.1999 FR 9916257
(71) Demandeur: MOTEURS LEROY-SOMER, F-16000 Angouleme (FR)
(72) Inventeur: Camus, Patrick, 16710 Saint-Yrieix (FR); Coupart, Eric, 16000 Angouleme (FR); Delamare, Jean-Louis, 16000 Angouleme (FR); Giraud, Régis, 16000 Angouleme (FR)
(74) Mandataire: Tanty, François

(57) **Abrégé**

Convertisseur de fréquence, caractérisé par le fait qu'il comporte un circuit électronique (1) de conversion de fréquence et un transformateur (2) comprenant un primaire et un secondaire, l'un au moins du primaire et du secondaire étant bobiné au moins partiellement sur une armature magnétique constituée par un paquet de tôles de forme similaire à celle d'un paquet de tôles de machine tournante électrique.

## Description

La présente invention concerne le domaine des convertisseurs de fréquence, et plus particulièrement mais non exclusivement ceux alimentés par les réseaux industriels ou publics, triphasés ou monophasés (tension comprise par exemple entre 100 et 500 V, fréquence égale par exemple à 50 ou 60 Hz) et capables de délivrer une très basse tension triphasée (par exemple 42 V) à une fréquence plus élevée (par exemple 200 Hz).

Des convertisseurs de ce type sont utilisés notamment sur les chantiers.

Les convertisseurs connus comportent deux machines asynchrones, l'une à cage fonctionnant en moteur et l'autre à bagues et balais, fonctionnant en générateur.

De tels convertisseurs assurent une bonne isolation galvanique, puisqu'il n'y a aucune partie électrique commune aux deux réseaux.

Toutefois, leur poids est important et constitue un handicap pour un usage sur chantier.

De plus, ces convertisseurs sont dépendants des caractéristiques du réseau d'alimentation.

L'invention a pour objet de remédier aux inconvénients des convertisseurs ci-dessus.

L'invention a encore pour objet de proposer un nouveau convertisseur qui soit d'un encombrement et d'un poids compatibles avec un usage sur chantier, tout en étant fiable et de coût relativement faible.

Le convertisseur de fréquence selon l'invention se caractérise par le fait qu'il comporte un circuit électronique de conversion de fréquence et un transformateur comprenant un primaire et un secondaire, l'un au moins du primaire et du secondaire étant bobiné au moins partiellement sur une armature magnétique constituée par un paquet de tôles de forme similaire à celle d'un paquet de tôles de machine tournante électrique, et comportant notamment des encoches comme un paquet de tôles de machine tournante.

Grâce à l'utilisation d'un circuit électronique de conversion de fréquence, le convertisseur est rendu moins dépendant des caractéristiques du réseau d'alimentation que les convertisseurs connus précités.

La fréquence au primaire peut être ajustée en permanence à la valeur souhaitée pour le secondaire.

De plus, l'absence de partie tournante augmente la fiabilité et facilite la maintenance et permet de réduire le poids et l'encombrement du convertisseur.

Enfin, l'utilisation d'un paquet de tôles similaire à un paquet de tôles de machine tournante électrique permet d'effectuer des économies d'échelle puisque ce paquet de tôles peut être fabriqué à un prix de revient relativement faible avec le même outillage que celui servant à la fabrication des moteurs et alternateurs.

Dans une réalisation préférée, le primaire est bobiné sur un paquet de tôles similaire à un paquet de tôles statoriques et le secondaire est bobiné sur un paquet de tôles de forme similaire à celle d'un paquet de tôles rotoriques, et comportant notamment des encoches.

Avantageusement, le primaire et le secondaire du transformateur sont logés dans un carter similaire à un carter de machine tournante électrique.

On peut éviter ainsi d'avoir à réaliser un carter spécifique, ce qui permet, là encore, de réaliser des économies d'échelle.

Dans une réalisation particulière, le primaire est alimenté avec une fréquence quelconque, éventuellement ajustable, souvent double, voire triple ou plus, de celle du réseau industriel ou public auquel est relié le convertisseur.

Toujours dans une réalisation particulière, le circuit électronique de conversion de fréquence est refroidi par un ventilateur fixé sur le carter dans lequel est logé le transformateur.

Toujours dans une réalisation particulière, le circuit électronique de conversion de fréquence est placé à l'extérieur dudit carter, de préférence dans un boîtier fixé sur la partie supérieure du carter.

Avantageusement, le carter est entouré par une cage de protection.

L'invention a encore pour objet un transformateur de tension, caractérisé par le fait qu'il comporte un primaire bobiné au moins partiellement, de préférence en totalité, sur un circuit d'encoches d'un paquet de tôles de forme similaire à celle d'un paquet de tôles de machine tournante électrique.

Le secondaire est également, avantageusement, bobiné au moins partiellement, de préférence en totalité, sur un paquet de tôles de forme similaire à celle d'un paquet de tôles de machine tournante électrique, ce paquet de tôles étant de préférence monté sur un arbre fixe disposé à l'intérieur du primaire.

Le rapport de transformation est compris entre par exemple 1 et 15, étant de préférence compris entre 8 et 12.

L'invention a encore pour objet un procédé de fabrication d'un convertisseur statique de fréquence, caractérisé par le fait qu'il comporte les étapes consistant à :
- fournir un carter de machine tournante électrique,
- réaliser le primaire du transformateur en utilisant une tôlerie similaire à celle d'une machine tournante électrique, et
- réaliser le secondaire du transformateur en utilisant une tôlerie similaire à celle d'une machine tournante électrique.

L'invention sera mieux comprise à la lecture de la description détaillée qui va suivre, d'un exemple de réalisation non limitatif, et à l'examen du dessin annexé, sur lequel :
- la figure 1 est un schéma bloc du convertisseur,
- la figure 2 est une vue schématique en perspective du convertisseur,
- la figure 3 est une vue schématique, en coupe axiale, du convertisseur de la figure 2,

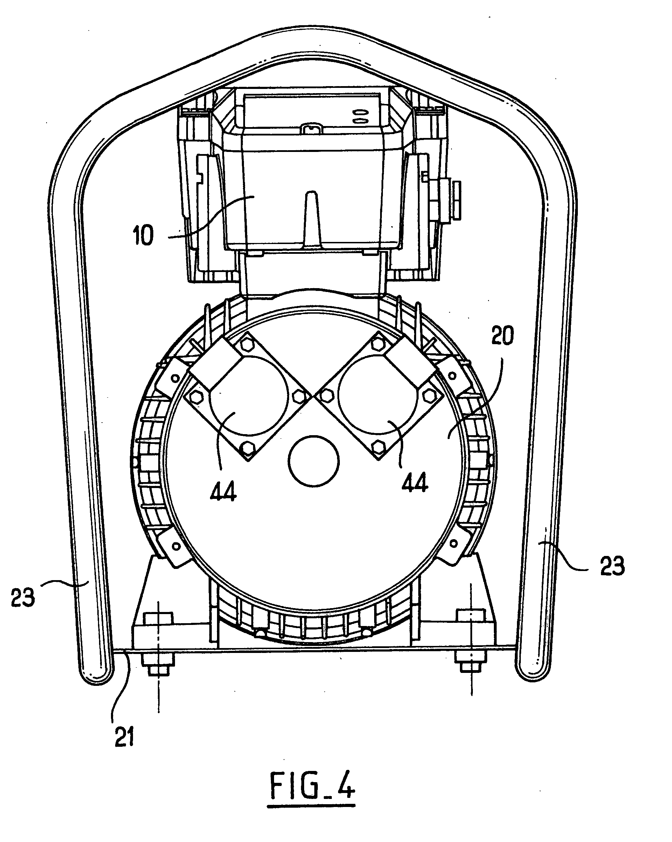

- la figure 4 est une vue de face du convertisseur, selon la flèche IV de la figure 2,
- la figure 5 est une vue schématique de la tôlerie du stator,
- la figure 6 est une vue schématique de la tôlerie du rotor,
- la figure 7 est un schéma de bobinage du stator, et
- la figure 8 est un schéma de bobinage du rotor.

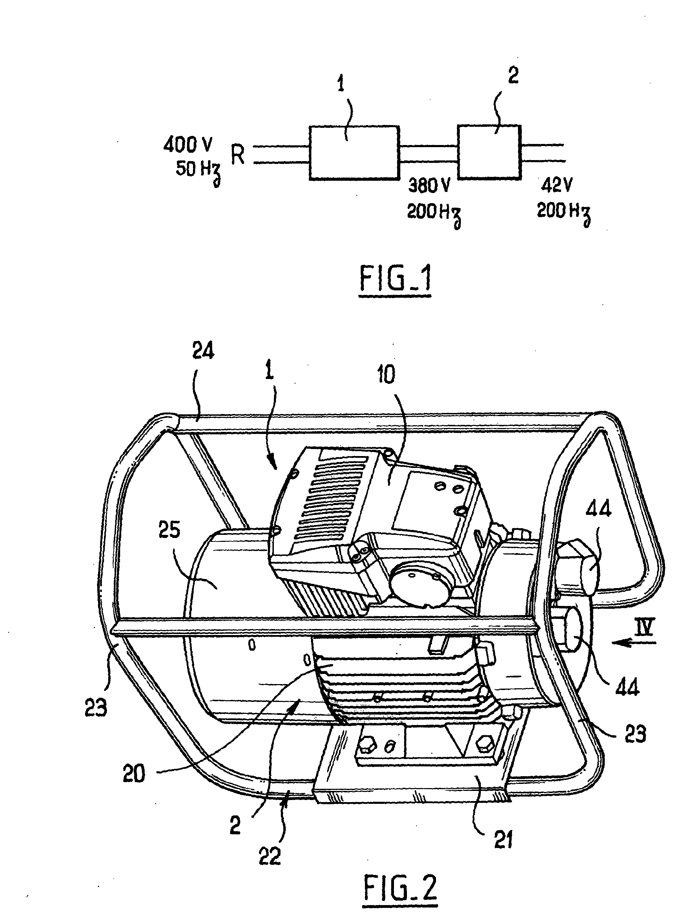

La figure 1 est un schéma bloc illustrant l'agencement général d'un convertisseur selon l'invention.

Celui-ci comporte un circuit électronique 1 de conversion de fréquence, relié à un réseau industriel R, par exemple un réseau 400 V 50 Hz triphasé.

Le circuit électronique 1 est de conception classique et ne sera pas décrit plus en détail.

Il délivre en sortie une tension voisine de la tension du réseau d'alimentation R mais avec une fréquence différente, égale dans le cas présent à 200 Hz.

Un transformateur 2 est relié à la sortie du circuit électronique 1 pour abaisser la tension à une tension inférieure à 50 V et délivrer dans l'exemple décrit 42 V à une fréquence de 200 Hz.

On a représenté sur la figure 2 le convertisseur.

Le circuit électronique 1 est logé à l'intérieur d'un boîtier 10.

Le transformateur 2 est logé à l'intérieur du carter 20 d'un moteur électrique existant, commercialisé sous la marque VARMECA par la société déposante.

Le boîtier 10 est fixé sur le dessus du carter 20.

Le carter 20 est boulonné sur une plaque de base 21, solidaire d'une cage de protection 22 comprenant deux portions 23 en U disposées respectivement à l'avant et à l'arrière du convertisseur, ces deux portions en U étant reliées par quatre portions rectilignes parallèles 24.

Un ventilateur 25 est fixé sur le carter 20.

Ce ventilateur 25 est agencé de manière à refroidir à la fois le carter 20 et le boîtier 10 et il est alimenté directement par le réseau industriel R.

Le primaire 30 du transformateur 2 est bobiné sur un paquet de tôles 31 similaire à un paquet de tôles de stator de machine tournante électrique.

Le secondaire 40 du transformateur est bobiné sur un paquet de tôles 41 similaire à un paquet de tôles de rotor de machine tournante électrique.

Les paquets de tôles 31 et 41 sont réalisés par empilage de manière conventionnelle de tôles magnétiques, afin de réduire les pertes par courants induits, et constituent des armatures magnétiques.

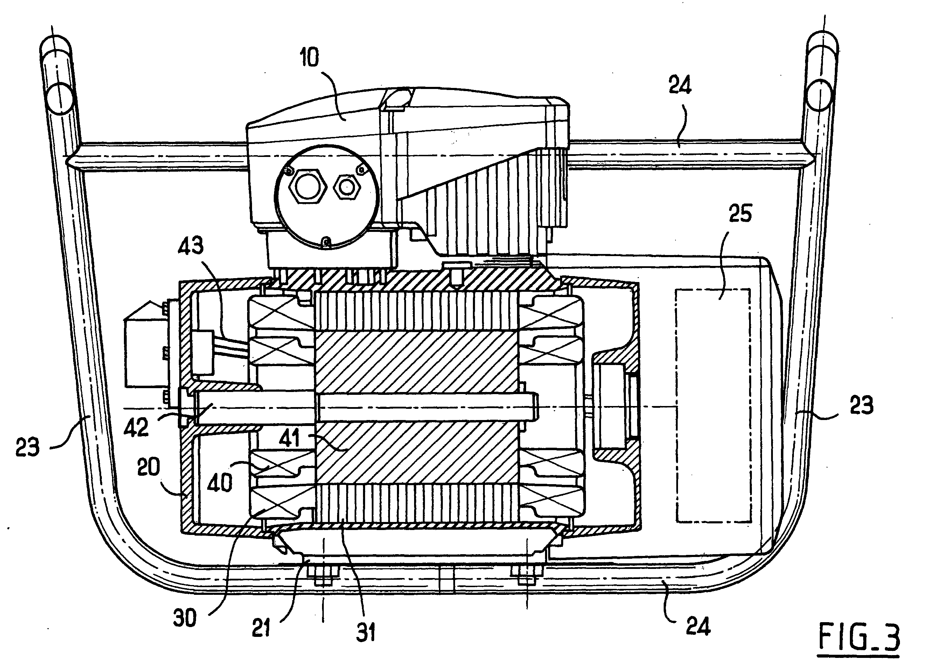

Le paquet de tôles 41 est monté sur un arbre 42 fixé à une extrémité sur le carter 20, comme on peut le voir sur la figure 3.

Les fils 43 du secondaire aboutissent à plusieurs prises 44, par exemple deux, montées sur la face avant du carter 20, laquelle se trouve à l'opposé du ventilateur 25.

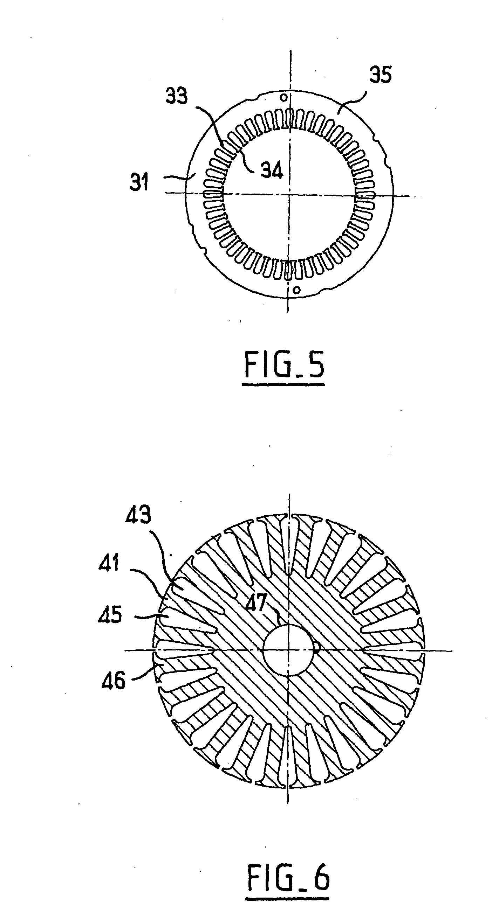

On a représenté sur la figure 5 le paquet de tôles 31 sur lequel sont bobinés les fils du primaire du transformateur 2.

On peut voir que la tôlerie utilisée est similaire à celle servant à réaliser le stator d'une machine asynchrone, c'est-à-dire présente la même forme générale, avec des encoches.

Dans l'exemple décrit, le paquet de tôles 31 comporte quarante-huit encoches 33 formées entre des dents 34, ces dernières se raccordant à une partie de culasse 35 annulaire.

On a représenté sur la figure 6 le paquet de tôles 41 sur lequel sont bobinés les fils du secondaire.

On peut voir que la tôlerie utilisée est similaire à celle servant à réaliser le rotor d'un moteur à rotor bobiné.

Le paquet de tôles 41 comporte à sa périphérie extérieure vingt-quatre encoches 45 formées entre des dents 46.

Le paquet de tôles 41 est traversé par une lumière centrale 47 servant au montage sur l'arbre 42.

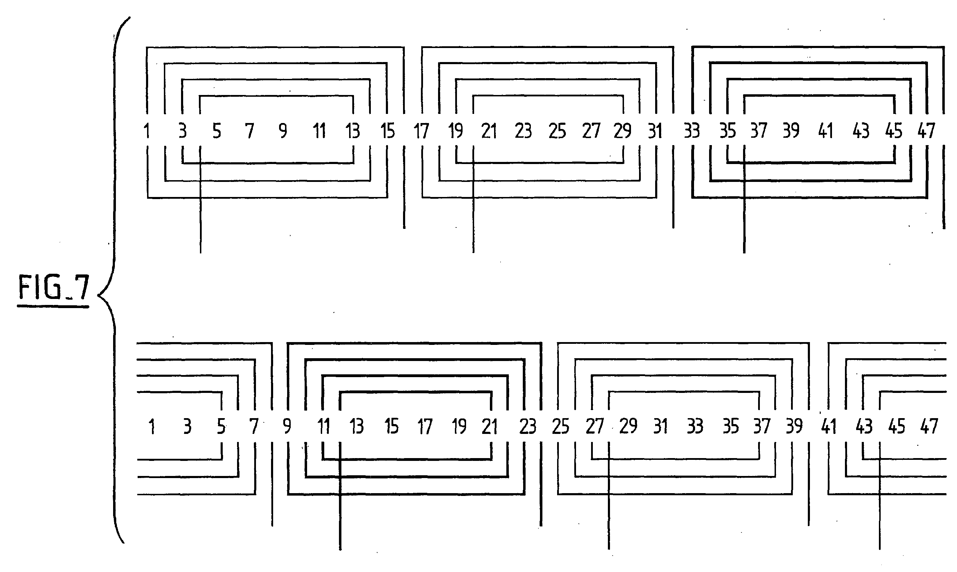

On a donné sur la figure 7 le schéma de bobinage du paquet de tôles 31.

Le bobinage dans l'exemple particulier décrit est du type concentrique à pôles conséquents et s'effectue avec six fils, avec connexion série.

D'autres types de bobinages peuvent être utilisés.

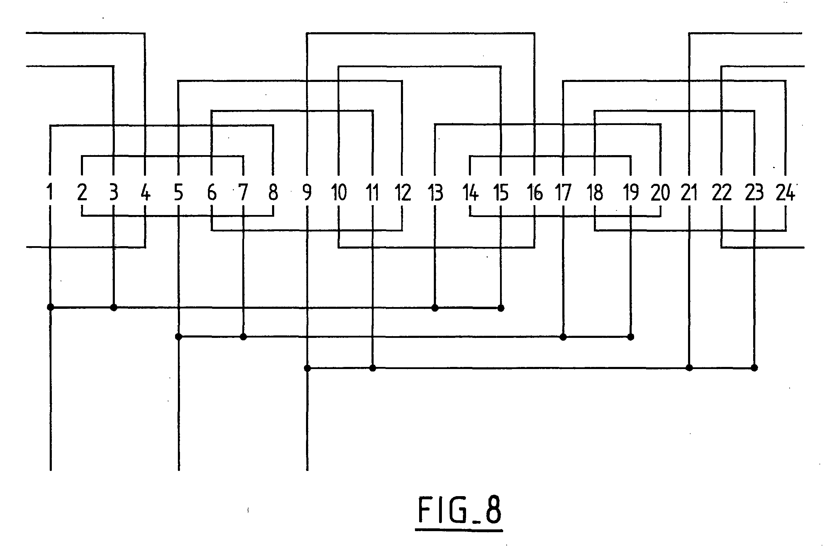

On a donné à titre d'exemple non limitatif le schéma de bobinage du paquet de tôles 41 sur la figure 8.

Le bobinage est du type concentrique à pôles conséquents et s'effectue avec deux voies parallèles couplées en triangle, ce qui permet d'avoir une sortie à trois fils.

D'autres types de bobinages peuvent être utilisés.

Bien entendu, l'invention n'est pas limitée à l'exemple de réalisation qui vient d'être décrit.

On peut notamment modifier la manière de bobiner le primaire et le secondaire, en fonction notamment du rapport de transformation souhaité, du nombre de phases et de la fréquence du courant.

## Revendications

1. Convertisseur de fréquence, caractérisé par le fait qu'il comporte un circuit électronique (1) de conversion de fréquence et un transformateur (2) comprenant un primaire et un secondaire, l'un au moins du primaire et du secondaire étant bobiné au moins partiellement sur une armature magnétique constituée par un paquet de tôles de forme similaire à celle d'un paquet de tôles de machine tournante électrique.

2. Convertisseur selon la revendication 1, caractérisé par le fait que le primaire est bobiné sur un paquet de tôles (31) de forme similaire à celle d'un paquet de tôles statoriques.

3. Convertisseur selon l'une des revendications 1 et 2, caractérisé par le fait que le secondaire est bobiné sur un paquet de tôles (41) de forme similaire à celle d'un paquet de tôles rotoriques.

4. Convertisseur selon l'une quelconque des revendications précédentes, caractérisé par le fait que le primaire est alimenté avec une fréquence au moins double, de préférence au moins triple, de celle du réseau d'alimentation (R) auquel est relié le convertisseur.

5. Convertisseur selon l'une quelconque des revendications précédentes, caractérisé par le fait que le secondaire délivre une très basse tension de sécurité isolée galvaniquement avec une fréquence de préférence supérieure à celle du réseau d'alimentation (R) auquel est relié le convertisseur.

6. Convertisseur selon la revendication précédente, caractérisé par le fait que la très basse tension de sécurité est inférieure à 50 V.

7. Convertisseur selon l'une des deux revendications précédentes, caractérisé par le fait que la fréquence d'alimentation du primaire est supérieure à celle du réseau et par exemple égale à 200 Hz.

8. Convertisseur selon l'une quelconque des revendications précédentes, caractérisé par le fait que le primaire et le secondaire du transformateur (2) sont logés dans un carter (20) de machine tournante électrique.

9. Convertisseur selon la revendication précédente, caractérisé par le fait que le circuit électronique (1) est refroidi par un ventilateur (25) solidaire du carter (20) dans lequel est logé le transformateur (2).

10. Convertisseur selon l'une des deux revendications précédentes, caractérisé par le fait que le circuit électronique (1) est placé à l'extérieur du carter (20), de préférence dans un boîtier (10) fixé sur la partie supérieure du carter (20).

11. Convertisseur selon l'une des trois revendications précédentes, caractérisé par le fait que le carter (20) est placé à l'intérieur d'une cage de protection (22).

12. Transformateur de tension (2), caractérisé par le fait qu'il comporte un primaire bobiné au moins partiellement, de préférence en totalité, sur un circuit d'encoches d'un paquet de tôles (31) de forme similaire à celle d'un paquet de tôles de machine tournante électrique.

13. Transformateur selon la revendication précédente, caractérisé par le fait qu'il comporte un secondaire bobiné au moins partiellement, de préférence en totalité, sur un paquet de tôles (41) de forme similaire à celle d'un paquet de tôles de machine tournante électrique, ce paquet de tôles étant de préférence monté sur un arbre fixe (42) disposé à l'intérieur du primaire (31).

14. Transformateur selon l'une quelconque des deux revendications précédentes, caractérisé par le fait que le rapport de transformation est compris entre 1 et 15, étant de préférence compris entre 8 et 12.

15. Procédé de fabrication d'un convertisseur statique de fréquence, caractérisé par le fait qu'il comporte les étapes consistant à :
- fournir un carter (20) de machine tournante électrique,
- réaliser le primaire du transformateur en utilisant une tôlerie comportant des encoches de manière similaire à celle d'une machine tournante électrique, et
- réaliser le secondaire du transformateur en utilisant une tôlerie comportant des encoches de manière similaire à celle d'une machine tournante électrique.
